# EUROPEAN PATENT SPECIFICATION

(11) **EP 4 261 256 B1**
(45) Date of publication and mention of the grant of the patent: **07.10.2026**
(21) Application number: 22178709.6
(22) Date of filing: 13.06.2022
(51) Int. Cl.: C09D 5/00

(54) **ELECTRONIC DEVICE INCLUDING FLUORESCENT PAINT**
ELEKTRONISCHE VORRICHTUNG MIT EINEM FLUORESZIERENDEN LACK
DISPOSITIF ÉLECTRONIQUE INCLUANT UNE PEINTURE FLUORESCENTE

(30) Priority: 13.04.2022 US 202217719809
(43) Date of publication of application: 18.10.2023
(73) Proprietor: Panasonic Intellectual Property Management Co., Ltd., Osaka-shi, Osaka 540-6207 (JP)
(72) Inventor: YUI, Tetsunobu, Osaka 540-6207 (JP); OGURA, Motonari, Osaka 540-6207 (JP); TOMITA, Kaname, Osaka 540-6207 (JP)
(74) Representative: Eisenführ Speiser

(56) References cited:
- EP-A1- 3 550 335
- WO-A1-2019/048624
- JP-A- 2019 052 868
- JP-A- H05 331 438
- US-A1- 2016 007 482
- US-A1- 2019 067 631

## Description

### BACKGROUND

### 1. Technical Field

The present disclosure relates to an electronic device composing a functional coated film on a surface of a housing, and a fluorescent coated film on the functional coated film.

### 2. Description of the Related Art

US 2016/0007482 A1 relates to prepregs and laminates having a UV curable resin layer, namely to prepregs having a UV curable resin layer located adjacent to a first thermally curable resin layer or sandwiched between first and second thermally curable resin layers, wherein the UV curable resin layer is uncured or partially cured, and as well to methods for preparing laminates using the prepregs wherein the laminate includes at least one UV curable resin encapsulated electrical component.

EP 3 550 335 A1 discloses a hard coat multilayer film which comprises layers, namely, a first hardcoat, a second hard coat and a transparent resin film sequentially from the surface layer side, and wherein: the first hardcoat is formed from a coating material that does not contain inorganic particles, while containing 100 parts by mass of (A) a polyfunctional (meth)acrylate, 0.5-20 parts by mass of (B) a compound having two or more secondary thiol groups in each molecule, 0.01-7 parts by mass of (C) a water repellent agent and 0.01-10 parts by mass of (D) a silane coupling agent; and the second hardcoat is formed from a coating material that contains 100 parts by mass of (A) a polyfunctional (meth)acrylate and 30-300 parts by mass of(F) inorganic fine particles having an average particle diameter of 1-300 nm. The polyfunctional (meth)acrylate (A) may contain 20% by mass or more of a tripentaerythritol acrylate. The coating material which forms the first hardcoat may additionally contain 0.1-5 parts by mass of (E) a thiophenyl-based photopolymerization initiator.

WO 2019/048624 A9 discloses methods of inspection and manufacture of flexible printed circuit boards and flexible sensor sheets, and apparatuses such as wound dressing components utilizing the same. The methods can comprise applying a coating material to a flexible printed circuit board, wherein the coating material comprises a material that will fluoresce when exposed to UV or visible light and the flexible printed circuit board comprises one or more electronic components. The coated flexible printed circuit board can be positioned under UV or visible light to cause the coating material to fluoresce.

US 2019/0067631 A1 discloses an organic light emitting diode package structure, an electronic device and a packaging method are disclosed. The organic light emitting diode package structure includes a first substrate, a second substrate, and an organic light emitting diode device. The second substrate is disposed opposite to the first substrate. The organic light emitting diode device is disposed between the first substrate and the second substrate. At least one of the first substrate and the second substrate is provided with a groove, and the groove is disposed on the surface of the first substrate facing the second substrate or/and the surface of the second substrate facing the first substrate. The organic light emitting diode device is sealed in the groove.

In order to obtain a fluorescent adhesive, comprising a fluorescent agent and capable of discriminating the acceptance or rejection of the coating state by image processing and useful as electrical and electronic apparatus products, etc, it is proposed in JP H05 331438 A that the fluorescent adhesive is obtained by including preferably 0.1-1 pt.wt. fluorescent agent such as Rhodamine in an adhesive such as a urethane acrylate-based ultraviolet curing adhesive. The coating state of the adhesive is preferably inspected by irradiating a material which is coated with the fluorescent adhesive containing the fluorescent agent for inspection with ultraviolet rays.

In order to provide a coated sheet substrate inspection method in which a coating agent is applied to a sheet substrate, capable of accurately inspecting the unevenness and omission of the coating agent even when both the sheet substrate and the coating agent have fluorescence properties, an inspection method of a coated sheet substrate is proposed in JP 2019-052868 A in which at least one side of a sheet substrate having a fluorescence property is coated with a coating agent having a fluorescence property different from that of the sheet substrate, which includes: a step A of irradiating excitation light to the coated sheet substrate; a step B of selectively receiving light with a specific light emitting band having a 25% or more light intensity difference between the light intensity of a specific light emitting band of fluorescence from the sheet substrate and the light intensity of a specific light emitting band of fluorescence from the coating agent, from either of the fluorescence from the sheet substrate generated by sheet substrate absorbing the excitation light and the fluorescence from the coating agent generated by the coating agent absorbing the excitation light; a step C of signal processing the light received in the step B and outputting a light emission intensity distribution; and a step D of determining a region where the light emission intensity is not specified, to be a defect on the basis of the light emission intensity distribution.

For example, Unexamined Japanese Patent Publication No. 2017-101995 (hereafter Related Publication 1) discloses a method for inspecting the degree of wear of floor lines. The method uses a line inspection paint, which contains fluorescent paint. That line inspection paint is applied on the floor lines or on the floor surface in the vicinity of a floor line. After the floor surface has been used for a predetermined period, the degree of wear can be inspected by confirming the fluorescent emission irradiating ultraviolet light.

Unexamined Japanese Patent Publication No. H11-173991 (hereafter Related Publication 2) discloses a method for inspecting effectiveness of protection coating which is applied on a painted surface of a vehicle. The protection coating includes a fluorescent substance by dispersing it into base material of the coating. Irradiating the coating layer with ultraviolet light and confirming the fluorescence intensity, the effectiveness of protection coating can be inspected.

### SUMMARY

The present disclosure provides an electronic device in which the degree of wear of a functional coated film can be inspected while taking advantage of the function of the film.

An electronic device according to the present disclosure is defined in claim 1.

According to the present disclosure, the wear degree of the functional coated film can be inspected while taking advantage of its functions.

### BRIEF DESCRIPTION OF THE DRAWINGS

Fig. 1 is an external view of an electronic device with the configuration of the present disclosure (Example 1);
Fig. 2 is a cross sectional view of an electronic device with the configuration of the present disclosure;
Fig. 3 is a shape of fluorescent coated film (Example 1);
Fig. 4 is a shape of fluorescent coated film (Example 2);
Fig. 5 is an external view of an electronic device with the configuration of the present disclosure (Example 2); and
Fig. 6 is an external view of an electronic device with the configuration of the present disclosure (Example 3).

### DETAILED DESCRIPTIONS

Recently, the demand for functional coatings is growing rapidly against the backdrop of the recent global COVID-19 epidemic. For example, the application of antibacterial coatings to existing products that are touched by human hands. However, the functional coated film in this disclosure is not limited to antibacterial coating. Flame retardant coatings, fingerprint resistant coatings, etc. are also applicable.

Particularly, when a functional coated film is applied on an electronic device, the coated film is often transparent. Therefore, even if the functional coated film is worn by human touch and loses its function, it is difficult to inspect the wear only by visual inspection without using tools. On the other hand, if the functional coated film is not transparent, there is no need to apply the present disclosure because the degree of wear can be inspected only by visual inspection without using tools.

The following is a supplementary explanation of the transparent color of the functional coated film that is the subject of this disclosure. For example, when applying a functional coated film on the display surface of an electronic device, it is desirable that the functional coated film be colorless and transparent. Also, when applying a functional coated film to existing products against the background of the recent COVID-19, it is desirable that the functional coated film be colorless and transparent because it can be used for existing various-color-tone products. On the other hand, the functional coated film does not necessarily need to be colorless. If the color of the functional coated film is similar to that of the applied location, it is possible to use colored transparent functional coated film because it does not affect the color tone of the electronic device.

In the Related Publication 1, a method of inspecting floor line wear by means of line inspection paints, mainly fluorescent paints, is disclosed. However, present disclosure is targeting functional coated films that function by having their coated film on the top surface. For example, antibacterial coated films. But in the Related Publication 1, a line inspection paint is applied to cover the floor line. Applying the method of the Related Publication 1 to the aforementioned functional coated films will lead to insufficient functionality of the functional coated film. Therefore, it is difficult to maintain sufficient functionality of the functional coated films by the method of Related Publication 1.

In the Related Publication 2, a method of inspecting coated film wear by dispersing a fluorescent substance into base material of the coating. However, this disclosure may cause a chemical reaction when the agents are mixed. There are two possible adverse effects that may occur due to this chemical reaction. The first is that it may interfere with the function of the functional coating itself. The other is that it may change the color tone and/or transparency of the coating. In the former case, the function of the functional coated film cannot be fully utilized. In the latter case, for example, in electronic devices that display images, the change in color tone and/or transparency can lead to a decrease in product performance. This shows that there are situations where Related Publication 2 cannot be applied.

Exemplary embodiments will be described below in detail with reference to the drawings as appropriate. However, descriptions more detailed than necessary may be omitted. For example, detailed descriptions of already well-known matters, and duplicated descriptions of substantially identical configurations may be omitted. These omissions are intended to avoid excessive redundancy in the following description, and to facilitate understanding of those skilled in the art. Note that the accompanying drawings and the following description are provided for those skilled in the art to fully understand the present disclosure, and are not intended to limit the subject matter recited in the appended claims.

Moreover, in the following exemplary embodiments, a description will be given of an example in which a cover opening and closing device is mounted on a monitor (which is an example of a display apparatus) to be attached to a passenger seat of an aircraft. However, the present disclosure is not limited to this example.

### (First exemplary embodiment)

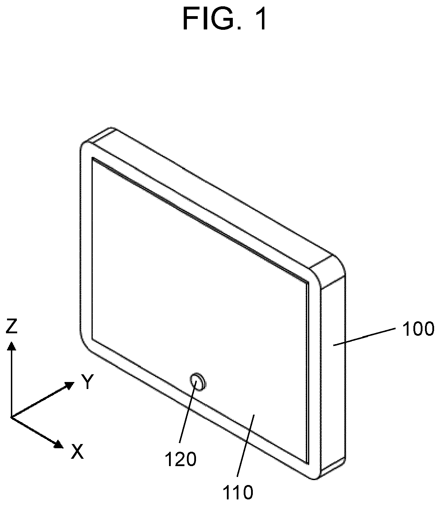

A first exemplary embodiment will be described below with reference to Figs. 1 to 6.

### [1-1. Configuration]

Fig. 1 is an external view of an example of an electronic device. The electronic device includes housing 100, functional coated film 110 applied on the surface of housing 100, and fluorescent coated film 120 applied on a part of functional coated film 110. Now, functional coated film 110 should be transparent, but both colored and colorless are acceptable as described above. Also, fluorescent coated film 120, which includes transparent fluorescent paint, should be transparent, but whether it is colored or colorless depends on the color of functional coated film 110 as follows. When functional coated film 110 is colorless and transparent, fluorescent coated film 120 also needs to be colorless and transparent. On the other hand, if functional coated film 110 is colored and transparent, fluorescent coated film 120 can take two ways. First is to be similar in color to functional coated film 110, and second is to be colorless and transparent. In this embodiment, the part of functional coated film 110 is to be worn or to be touched by a human.

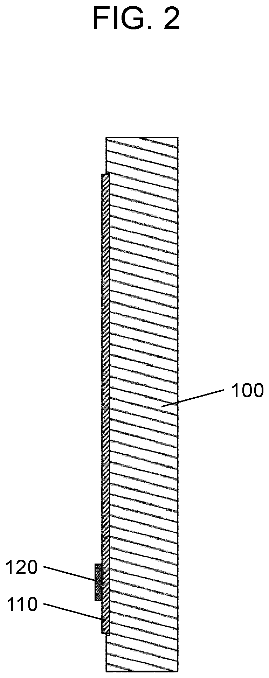

Figure 2 is the X-axis cross-sectional view of Figure 1, including housing 100, functional coated film 110, and fluorescent coated film 120.

Functional coated film 110 may be applied to only a portion of housing 100, or it may be applied to the entire housing 100 to cover it.

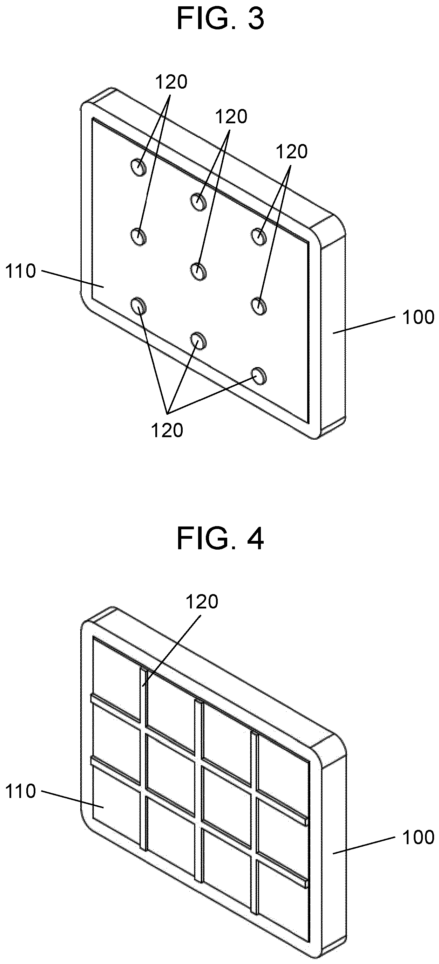

Fluorescent coated film 120 does not necessarily have to be applied to only one point, as shown in Figure 1. It can be applied in the form of dots at multiple points as shown in Fig. 3, or in the form of a grid as shown in Fig. 4. In other words, fluorescent coated film 120 has a dot shape or a linear shape.

The shape of fluorescent coated film 120 shown in Figures 1 and 3 is circular, but it does not necessarily have to be circular. Any polygonal shape, ellipse, or other shape such as letters or symbols are also acceptable.

The shape of fluorescent coated film 120 shown in Figure 4 is of equal pitch and is a grid shape with straight lines perpendicular and horizontal to the product axis described in Figure 1, but it is not necessary to satisfy these requirements. Shapes such as straight lines, diagonal lines, rectangular lines, curves, etc., which do not have equal pitch, are also acceptable.

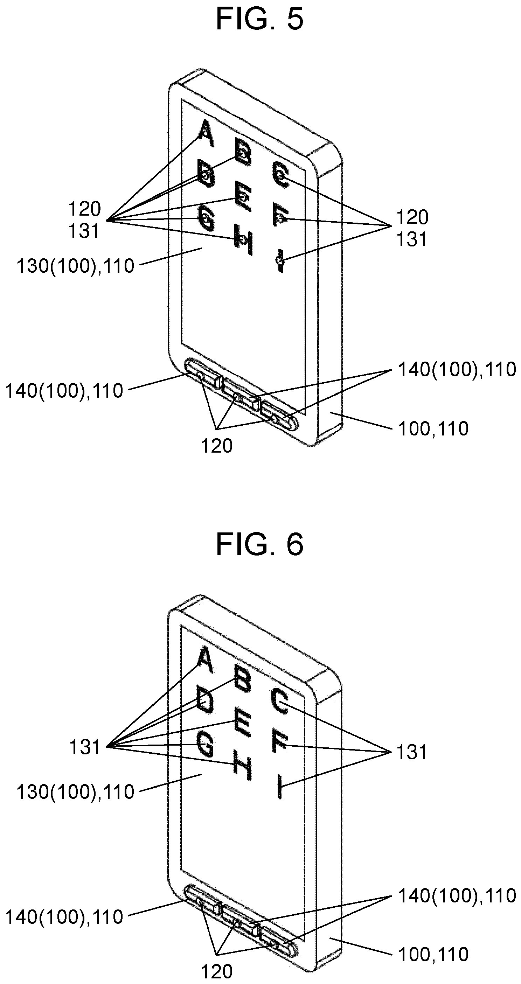

Fig. 5 is an external view of an example of an electronic device having housing 100 including touch panel display 130 and mechanical button 140, having functional coated film 110 applied to the entire surface of housing 100, and having fluorescent coated film 120 applied on icons 131 displayed on touch panel display 130 and applied on mechanical buttons 140.

Fig. 6 is an example of an electronic device having a configuration generally identical to that of Fig. 5, but fluorescent coated film 120 is not applied on icons 131 displayed on touch panel display 130.

In common with Fig. 5 and Fig. 6, functional coated film 110 does not necessarily have to be applied over the entire surface of housing 100. However, functional coated film 110 must be applied to the areas where fluorescent coated film 120 is applied.

Any method may be used to form fluorescent coated film 120 as described above. Generally, the method of masking and applying the coating by spraying is considered. On the other hand, silk printing or pad printing can also be used. In situations where mass production does not need to be taken into consideration, the method using a brush or brushstroke is also acceptable.

The location where fluorescent coated film 120 is applied should be the one where functional coated film 110 is most likely to wear. For example, if the main cause of wear of functional coated film 110 is human touch, it is desirable to select a location that is easily touched by humans and apply fluorescent coated film 120 to the location. Specifically, when the electronic device in this embodiment has touch panel display 130 as shown in Fig. 5 and Fig. 6, it is desirable to apply fluorescent coated film 120 on operation icons 131 displayed on touch panel display 130. Operation icons 131 referred to here are, for example, a home icon, an application startup icon, an application close icon, and the like. Alternatively, if the electronic device in this embodiment has mechanical button 140 as shown in Fig. 5 and Fig. 6, it is also desirable to apply fluorescent coated film 120 on mechanical button 140. As another example, if the main cause of wear of functional coated film 110 is the sliding of the components of the electronic device, it is also desirable to apply fluorescent coated film 120 to the place where sliding is occurring. For example, if the electronic device in this embodiment is a device such as a charging table for a certain product, and there is a part that slides when the product is charged, the sliding part can be selected as the applying point of fluorescent coated film 120. Alternatively, if the electronic device in this embodiment is a portable device and it has a case for storage and sliding may occur between the storage case and the electronic device, the sliding point can be selected as the applying point of fluorescent coated film 120. Or, if the electronic device in this embodiment has a cable and the cable has a part to be slidden with mouthpiece, fluorescent coated film 120 is applied to either or both of the cable or the mouthpiece. In the case of the above example, the housing in the claim shall include the cable and mouthpiece.

On the other hand, by applying fluorescent coated film 120, functional coated film 110 is no longer the top surface, so the area where fluorescent coated film 120 is applied will lose its functionality. Therefore, the applying area of fluorescent coated film 120 should be made as small as possible.

Specifically, it is possible to find areas in the product that are relatively prone to wear and apply fluorescent coated film 120 to these areas in a discrete manner, as shown in Fig. 3 and Fig. 5, or in a linear manner, as shown in Fig. 4. In the example of Fig. 5, if it is found that the wear on mechanical button 140 is more severe than the wear on touch panel display 130, it is possible to apply fluorescent coated film 120 only on mechanical button 140 as shown in Fig. 6. In this case, the advantage of this method is that the functional coated film on touch panel display 130 will not be inhibited at all. Furthermore, if the part of the product that is most susceptible to wear is obvious, fluorescent coated film 120 can be applied only to that part as shown in Fig. 1, so that the lack of functionality of functional coated film 110 can be minimized.

### [1-2. Operation]

The following is a description of the operation of the electronic device configured as described above.

When a user handles an electronic device, wear of functional coated film 110 and fluorescent coated film 120 is assumed to occur for some reason. The causes of wear referred here include contact by the user, sliding wear between components, sliding wear between other products, and so on. For any of these reasons, both functional coated film 110 and fluorescent coated film 120 wear. But since fluorescent coated film 120 is on the more superficial layer, it wears first. Preferably, the wear resistance of fluorescent coated film 120 should be weaker than the wear resistance of functional coated film 110, so that fluorescent coated film 120 will certainly wear out first. As a means of making the wear resistance of fluorescent coated film 120 weaker than that of functional coated film 110, it is possible to select such a coating film originally. In addition to selecting such a coating film, it is also possible to achieve this by making the thickness of fluorescent coated film 120 thinner than that of functional coated film 110.

After the electronic device in this embodiment is put into use, fluorescent coated film 120 is periodically irradiated with ultraviolet light using a black light or the like. Here, "periodically" may mean every month, for example, or for a shorter or longer period. Since the degree of wear varies according to the frequency of use of the electronic device, it may be determined by the user as appropriate. If it is determined that even a portion of fluorescent coated film 120 has disappeared due to UV irradiation, it can be determined that functional coated film 110 may have lost its function due to wear, and therefore the timing for re-applying functional coated film 110 can be determined.

Below shows how to confirm that fluorescent coated film 120 is missing. Regardless of the shape of applying fluorescent coated film 120, it is possible to confirm the difference by taking photographs or other images of the film in the state before it is put into use. Alternatively, it is also possible to prepare a jig for checking, in which holes are made only in the areas where fluorescent coated film 120 is applied. On the other hand, if fluorescent coated film 120 is applied in a regular manner as shown in Fig. 3 and Fig. 4, it is not necessary to take the aforementioned approach. It is possible to determine the defect based on its regularity. Therefore, although it was mentioned that the shape of applying fluorescent coated film 120 does not necessarily have to be regular, it has the advantage of confirmation if the coating is applied in a regular manner.

Below discusses the case when fluorescent coated film 120 is found to be missing and functional coated film 110 needs to be reapplied. The re-applying of functional coated film 110 can be applied over the already applied functional coated film 110 and the already applied fluorescent coated film 120. It is also possible to determine when the next re-applying should be done by applying an additional fluorescent coated film on the re-applied functional coated film.

### [1-3. Effects and the like]

As described above, the electronic device can determine the degree of wear of functional coated film 110 by observing the degree of wear of fluorescent coated film 120 while maintaining sufficient functionality of functional coated film 110.

### (Second exemplary embodiment)

A second exemplary embodiment will be described below. The same parts as in a first exemplary embodiment are marked with the same sign, and the explanation is omitted.

### [2-1. Configuration]

The configuration of the electronic device in this second embodiment is the same as that in first embodiment. However, for functional coated film 110 in this second embodiment, it is assumed that it functions by being touched by a person. In this case, it is mainly considered that the main cause of wear of functional coated film 110 is also touch of a person's finger. In this second embodiment, functional coated film 110 has an antibacterial function and is applied to the entire touch panel display 130, as an example. The functional coated film with antibacterial performance is specifically a glass coating agent, a resin coating agent, etc. that contains metal particles (Ag, Cu, etc.) having antibacterial and antiviral performance. And in this second embodiment, when fluorescent coated film 120 is applied to only one point as shown in Fig. 1, it is assumed as an explanation example that fluorescent coated film 120 is applied to the approximate center point of the home icon on the touch panel display. When fluorescent coated film 120 is applied to multiple points in the form of dots as shown in Figure 3, it is assumed as an explanation example that fluorescent coated film 120 is applied to the approximate center point of the application startup icon on the touch panel display. When fluorescent coated film 120 is applied in a grid pattern as shown in Figure 4, it is assumed as an explanation example that fluorescent coated film 120 is applied to connect the approximate center points of the application startup icon on the touch panel display.

Here, for the dotted fluorescent coated film 120 in Fig. 1 and Fig.3, it is desirable that each dot is less than the size of a human finger. This is because the area where fluorescent coated film 120 is applied does not have antibacterial performance. On the other hand, as described in first embodiment, since the defect of fluorescent coated film 120 is confirmed by visual inspection under UV irradiation, the minimum size should be a visible size. However, if a loupe or the like is used in conjunction with the UV irradiation for confirmation, the minimum dimensions are not limited to the above. For the multiple dot-shaped fluorescent coated film 120 in Fig. 3, it is desirable that the distance between each dot is larger than the size of a human finger.

Specifically, the minimum dimension of each dot should be 1 mm or more, the maximum dimension should be 10 mm or less, preferably 5 mm or less, and the spacing between each dot should be 10 mm or more, preferably 20 mm or more. However, these values do not limit the claims.

Similarly, for the grid-shaped fluorescent coated film 120 in Figure 4, each line width should be visible, but narrower than the size of a human finger, the spacing between each line should be wider than the size of a human finger.

Specifically, the minimum dimension of each line width should be 1 mm or more, the maximum dimension should be 10 mm or less, preferably 5 mm or less, and the distance between each line should be 10 mm or more, preferably 20 mm or more. However, these values do not limit the claims.

In addition, the total applying area of fluorescent coated film 120 should be set to be 1% or less of the total applying area of functional coated film 110. In the case of Fig. 1, this means that the area of fluorescent coated film 120 is 1% or less of the area of functional coated film 110. On the other hand, in the case of Figure 3, it means that the total area of all the dots of fluorescent coated film 120 is less than 1% of the area of functional coated film 110. In the same way, in the case of Fig. 4, this means that the total area of fluorescent coated film 120 applied in a grid pattern is 1% or less of the area of functional coated film 110.

### [2-2. Effects and the like]

As described above, a case in which the main cause of wear of fluorescent coated film 120 is due to a person touching it with a finger was described. This configuration makes it possible to provide a method for determining the degree of wear of functional coated film 110 while maintaining the functionality of functional coated film 110 even in a situation where a person touches the film with a finger.

In addition, in this embodiment, the total applying area of fluorescent coated film 120 is less than 1% of the total applying area of functional coated film 110. This is in accordance with the antimicrobial performance standard in the antimicrobial test described in ISO 22196. This is the minimum requirement to be met in order to obtain an antimicrobial activity value of 2.0 or higher. In other words, if the area of the fluorescent coated film exceeds 1%, it is difficult to meet the antimicrobial performance standard of ISO 2196. On the other hand, even if the area of the fluorescent coated film is less than 1%, it is not guaranteed to meet the antimicrobial performance criteria of ISO 2196.

In addition, the following measures can be taken to increase the possibility of meeting the antimicrobial performance criteria of ISO 22196. In ISO 22196, antimicrobial performance is evaluated by preparing a 50 mm square test piece. Therefore, it is desirable to ensure that when an arbitrary 50 mm square is cut out from the area where functional coated film 110 is applied, the area of the contained fluorescent coated film 120 is less than 1% of the total area.

This makes it possible to determine the degree of wear of functional coated films while maintaining sufficient functionality, including the possibility of meeting ISO standards, especially for functional coated films with antimicrobial performance.

### (Third exemplary embodiment)

A third exemplary embodiment will be described below. The same parts as in a first exemplary embodiment are marked with the same sign, and the explanation is omitted.

### [3-1. Configuration]

The configuration of the electronic device in this third exemplary embodiment is identical to that in the first exemplary embodiment. However, functional coated film 110 shall be what is not shown in second exemplary embodiment. That is, the functionality of functional coated film 110 is other than that functions when people touch it with their finger. Specifically, functional coated film 110 is a flame retardant coating, etc. In this third exemplary embodiment, the electronic device has the configuration shown in Fig. 1, Fig. 3, or Fig. 4, functional coated film 110 is a flame-retardant coating, fluorescent coated film 120 is not flame-retardant, and fluorescent coated film 120 is applied to include the points that are easily worn by sliding, as an example.

When an actual flammability test is conducted using an electronic device such as the example above, fluorescent coated film 120, which is located more toward the flame source than the flame-retardant coating, which is functional coated film 110, will be exposed to the flame source without the protection of functional coated film 110. In addition, since fluorescent coated film 120 is not flame-retardant, the larger the applying area of fluorescent coated film 120, the more unfavorable the flammability becomes. Therefore, it is desirable to keep the applying area of fluorescent coated film 120 as small as possible.

In the case of a flammability test, it is considered desirable to use the application method of Fig. 1 or Fig. 3 because flames are likely to propagate in the grid-like application method shown in Fig. 4. However, if the direction in which flames are likely to propagate is known, it is possible to apply fluorescent coated film 120 in such a way that lines are not drawn in one direction.

### [3-2. Effects and the like]

As described above, using flame-retardant coatings as an example, electronic device which the degree of wear of functional coated film 110 can be determined while sufficiently maintaining the functionality of functional coated film 110 was described.

## Claims

1. An electronic device including fluorescent paint, the electronic device comprising:
a housing (100);
a functional coated film (110) applied on a surface of the housing (100), the functional coated film (110) being transparent and having a function; and
a fluorescent coated film (120) including transparent fluorescent paint and applied on a part of the functional coated film (110),
wherein the part of the functional coated film (110) is to be worn and to be touched by a human, and
the fluorescent coated film (120) is weaker in wear resistance than the functional coated film (110)..

2. The electronic device according to claim 1, wherein
the housing (100) includes a touch panel display (130) configured to display an operation icon (131), and
the fluorescent coated film (120) is applied on the operation icon (131).

3. The electronic device according to claim 3, wherein the operation icon (131) is one of a home icon, an application startup icon, or an application close icon.

4. The electronic device according to claim 1, wherein
the housing (100) includes a mechanical button (140), and
the fluorescent coated film (120) is applied on the mechanical button (140).

5. The electronic device according to any one of claims 1 to 4, wherein the functional coated film (110) is antibacterial.

6. The electronic device according to claim 5, wherein an area of the fluorescent coated film (120) is equal to or less than one percent of an area of the functional coated film (110).

7. The electronic device according to claim 6, wherein
the housing (100) includes a touch panel display (130) and a mechanical button (140),
the functional coated film (110), which is antibacterial, is applied on both the touch panel display (130) and the mechanical button (140), and
the fluorescent film is applied only on the mechanical button (140).

8. The electronic device according to any one of claims 1 to 4, wherein the functional coated film (110) is flame retardant.

9. The electronic device according to any one of claims 1 to 8, wherein the fluorescent coated film (120) has a dot shape.

10. The electronic device according to any one of claims 1 to 8, wherein the fluorescent coated film (120) has a linear shape.

11. The electronic device according to any one of claims 1 to 10, wherein the fluorescent coated film is at least partially worn off, wherein the electronic device further comprises:
a further functional coated film (110) applied on the functional coated film (110) and the at least partially worn fluorescent coated film (120), the functional coated film (110) being transparent and also having the function,
a further fluorescent coated film (120) including transparent fluorescent paint and on a part of the further functional coated film (110).

12. A method of inspecting the fluorescent coated film (120) of the electronic device according to any one of claims 1 to 11,
the method comprising irradiating, by a blacklight, ultraviolet rays to both the functional coated film (110) and the fluorescent coated film (120) of the electronic device.

13. The method of inspecting according to claim 12,
wherein the method further comprises, when the fluorescent coated film (120) is found to be missing, a further applying of a further function coated film (110) over the already applied functional coated film (110) and the already applied fluorescent coated film (120) and a further applying of a further fluorescent coated film (120) on a part of the applied further functional coated film (110).

## Patentansprüche

1. Elektronische Vorrichtung mit fluoreszierender Farbe, wobei die elektronische Vorrichtung aufweist:
ein Gehäuse (100);
eine funktionale beschichtete Folie (110), die auf einer Oberfläche des Gehäuses (100) aufgebracht ist, wobei die funktionale beschichtete Folie (110) transparent ist und eine Funktion erfüllt; und
eine fluoreszierende beschichtete Folie (120), die transparente fluoreszierende Farbe aufweist und auf einem Teil der funktionalen beschichteten Folie (110) aufgebracht ist,
wobei der Teil der funktionalen beschichteten Folie (110) Verschleiß auszusetzen ist und von einem Menschen zu berühren ist, und
die fluoreszierende beschichtete Folie (120) eine geringere Verschleißfestigkeit aufweist als die funktionale beschichtete Folie (110).

2. Elektronische Vorrichtung nach Anspruch 1, wobei
das Gehäuse (100) ein Touchscreen-Display (130) umfasst, das zur Anzeige eines Bedienungssymbols (131) ausgelegt ist, und
die fluoreszierende beschichtete Folie (120) auf das Bedienungssymbol (131) aufgebracht ist.

3. Elektronische Vorrichtung nach Anspruch 3, wobei das Bedienungssymbol (131) entweder ein Startseite-Symbol, ein Symbol zum Starten einer Anwendung oder ein Symbol zum Schließen einer Anwendung ist.

4. Elektronische Vorrichtung nach Anspruch 1, wobei
das Gehäuse (100) eine mechanische Taste (140) aufweist und
die fluoreszierende beschichtete Folie (120) auf der mechanischen Taste (140) aufgebracht ist.

5. Elektronische Vorrichtung nach einem der Ansprüche 1 bis 4, wobei die funktionale beschichtete Folie (110) antibakteriell ist.

6. Elektronische Vorrichtung nach Anspruch 5, wobei eine Fläche der fluoreszierenden beschichteten Folie (120) gleich oder kleiner als ein Prozent einer Fläche der funktionalen beschichteten Folie (110) ist.

7. Elektronische Vorrichtung nach Anspruch 6, wobei
das Gehäuse (100) ein Touchscreen-Display (130) und eine mechanische Taste (140) aufweist,
die funktionale beschichtete Folie (110), die antibakteriell ist, sowohl auf dem Touchscreen-Display (130) als auch auf der mechanischen Taste (140) aufgebracht ist, und
die fluoreszierende Folie nur auf der mechanischen Taste (140) aufgebracht ist.

8. Elektronische Vorrichtung nach einem der Ansprüche 1 bis 4, wobei die funktionale beschichtete Folie (110) flammhemmend ist.

9. Elektronische Vorrichtung nach einem der Ansprüche 1 bis 8, wobei die fluoreszierende beschichtete Folie (120) eine Punktform aufweist.

10. Elektronische Vorrichtung nach einem der Ansprüche 1 bis 8, wobei die fluoreszierende beschichtete Folie (120) eine lineare Form aufweist.

11. Elektronische Vorrichtung nach einem der Ansprüche 1 bis 10, wobei die fluoreszierende beschichtetet Folie zumindest teilweise abgenutzt ist, wobei die elektronische Vorrichtung ferner aufweist:
eine weitere funktionale beschichtete Folie (110), die auf der funktionalen beschichteten Folie (110) und der zumindest teilweise abgenutzten fluoreszierenden beschichteten Folie (120) aufgebracht ist, wobei die funktionale beschichtete Folie (110) transparent ist und zudem die Funktion hat,
eine weitere fluoreszierende beschichtete Folie (120), die transparente fluoreszierende Farbe aufweist und auf einem Teil der weiteren funktionalen beschichtete Folie (110) aufgebracht ist.

12. Verfahren zur Überprüfung der fluoreszierenden beschichteten Folie (120) der elektronischen Vorrichtung gemäß einem der Ansprüche 1 bis 11,
wobei das Verfahren ein Bestrahlen sowohl der funktionalen beschichteten Folie (110) als auch der fluoreszierenden beschichteten Folie (120) der elektronischen Vorrichtung mit ultravioletten Strahlen mittels eines Schwarzlichts umfasst.

13. Verfahren zur Prüfung gemäß Anspruch 12,
wobei das Verfahren, wenn festgestellt wird, dass die fluoreszierende beschichtete Folie (120) fehlt, ferner ein weiteres Aufbringen einer weiteren funktionalen beschichteten Folie (110) über der bereits aufgebrachten funktonalen beschichteten Folie (110) und der bereits aufgebrachten fluoreszierenden beschichtete Folie (120) und ein weiteres Aufbringen einer weiteren fluoreszierenden beschichteten Folie (120) auf einem Teil der aufgebrachten weiteren funktionalen beschichteten Folie (110) umfasst.

## Revendications

1. Dispositif électronique comprenant de la peinture fluorescente, le dispositif électronique comprenant:
un boîtier (100);
un film fonctionnel revêtu (110) qui est appliqué sur une surface du boîtier (100), le film fonctionnel revêtu (110) étant transparent et ayant une fonction; et
un film fluorescent revêtu (120) qui comprend de la peinture fluorescente transparente et est appliqué sur une partie du film fonctionnel revêtu (110),
dans lequel la partie du film fonctionnel revêtu (110) est destinée à être usée et à être touchée par un être humain, et
le film fluorescent revêtu (120) présentant une résistance à l'usure inférieure à celle du film fonctionnel revêtu (110).

2. Dispositif électronique selon la revendication 1, dans lequel
le boîtier (100) comprend un écran tactile (130) qui est configuré pour afficher une icône de commande (131), et
le film fluorescent revêtu (120) est appliqué sur l'icône de commande (131).

3. Dispositif électronique selon la revendication 3, dans lequel l'icône de commande (131) est soit une icône de page d'accueil, une icône de démarrage d'application soit une icône de fermeture d'application.

4. Dispositif électronique selon la revendication 1, dans lequel
le boîtier (100) comprend un bouton mécanique (140), et
le film fluorescent revêtu (120) est appliqué sur le bouton mécanique (140).

5. Dispositif électronique selon l'une quelconque des revendications 1 à 4, dans lequel le film fonctionnel revêtu (110) est antibactérien.

6. Dispositif électronique selon la revendication 5, dans lequel une surface du film fluorescent revêtu (120) est inférieure ou égale à 1 % d'une surface du film fonctionnel revêtu (110).

7. Dispositif électronique selon la revendication 6, dans lequel
le boîtier (100) comprend un écran tactile (130) et un bouton mécanique (140),
le film fonctionnel revêtu (110) qui est antibactérien est appliqué aussi bien sur l'écran tactile (130) que sur le bouton mécanique (140), et
le film fluorescent est appliqué uniquement sur le bouton mécanique (140).

8. Dispositif électronique selon l'une quelconque des revendications 1 à 4, dans lequel le film fonctionnel revêtu (110) est ignifuge.

9. Dispositif électronique selon l'une quelconque des revendications 1 à 8, dans lequel le film fluorescent revêtu (120) présente une forme de point.

10. Dispositif électronique selon l'une quelconque des revendications 1 à 8, dans lequel le film fluorescent revêtu (120) présente une forme linéaire.

11. Dispositif électronique selon l'une quelconque des revendications 1 à 10, dans lequel le film fluorescent revêtu est au moins en partie usé, dans lequel le dispositif électronique comprend en outre:
un autre film fonctionnel revêtu (110) qui est appliqué sur le film fonctionnel revêtu (110) et le film fluorescent revêtu (120) au moins en partie usé, le film fonctionnel revêtu (110) étant transparent et ayant également la fonction,
un autre film fluorescent revêtu (120) qui comprend de la peinture fluorescente transparente et est appliqué sur une partie dudit autre film fonctionnel revêtu (110).

12. Procédé d'inspection du film fluorescent revêtu (120) du dispositif électronique selon l'une quelconque des revendications 1 à 11,
le procédé comprenant une exposition à la fois du film fonctionnel revêtu (110) et du film fluorescent revêtu (120) du dispositif électronique à des rayons ultraviolets par une lumière noire.

13. Procédé d'inspection selon la revendication 12,
dans lequel le procédé comprend en outre, lorsqu'on constate que le film fluorescent revêtu (120) est manquant, une autre application d'un autre film fonctionnel revêtu (110) sur le film fonctionnel revêtu (110) déjà appliqué et sur le film fluorescent revêtu (120) déjà appliqué, ainsi qu'une autre application d'un autre film fluorescent revêtu (120) sur une partie de l'autre film fonctionnel revêtu (110) appliqué.
